# EUROPEAN PATENT APPLICATION

(11) **EP 1 274 248 A1**
(43) Date of publication of application: **08.01.2003**
(21) Application number: 02014057.0
(22) Date of filing: 28.06.2002
(51) Int. Cl.: H04N 7/24

(54) **Data reproduction apparatus and data reproduction method**

(30) Priority: 29.06.2001 JP 2001198531
(71) Applicant: MATSUSHITA ELECTRIC INDUSTRIAL CO., LTD., Kadoma-shi, Osaka 571-8501 (JP)
(72) Inventor: Matsui, Yoshinori, Ikoma-shi, Nara 630-0212 (JP); Imura, Koji, Machida-shi, Tokyo 194-0013 (JP); Otake, Naoto, Yokohama-shi, Kanagawa 233-0007 (JP)
(74) Representative: Balsters, Robert

(57) **Abstract**

A data reproduction apparatus comprises a data request unit for requesting a server to transmit data; a reception buffer for holding received data; a control unit for detecting the beginning position of AV data, and instructing a decoding unit to start decoding of the AV data when the amount of data stored in the reception buffer has reached a set value after detection of the beginning position position; a decoding unit for decoding the AV data stored in the reception buffer; a clock circuit for outputting a clock signal; and a display unit for displaying the decoded data. Since the AV data of the size required for data reproduction can be reliably pre-buffered when receiving the data, stable data reproduction can be carried out.

## Description

### FIELD OF THE INVENTION

The present invention relates to an apparatus and a method for reproducing data and, more particularly, to those for reproducing a file in which data of plural attributes are multiplexed, while downloading the file from a data server.

### BACKGROUND OF THE INVENTION

In recent years, a PC (Personal Computer) and a mobile terminal have been allowed to reproduce a file in which data of plural attributes such as audio data and video data are multiplexed, while downloading the file from a data server. As an example of a file format employed for this purpose, there is a program stream (hereinafter referred to as a PS) standardized by MPEG (Motion Picture Experts Group) of ISO (International Standards Organization).

Hereinafter, a description will be given of the construction and operation of a conventional data reproduction apparatus which receives a PS file in which audio data and video data are multiplexed, with reference to drawings.

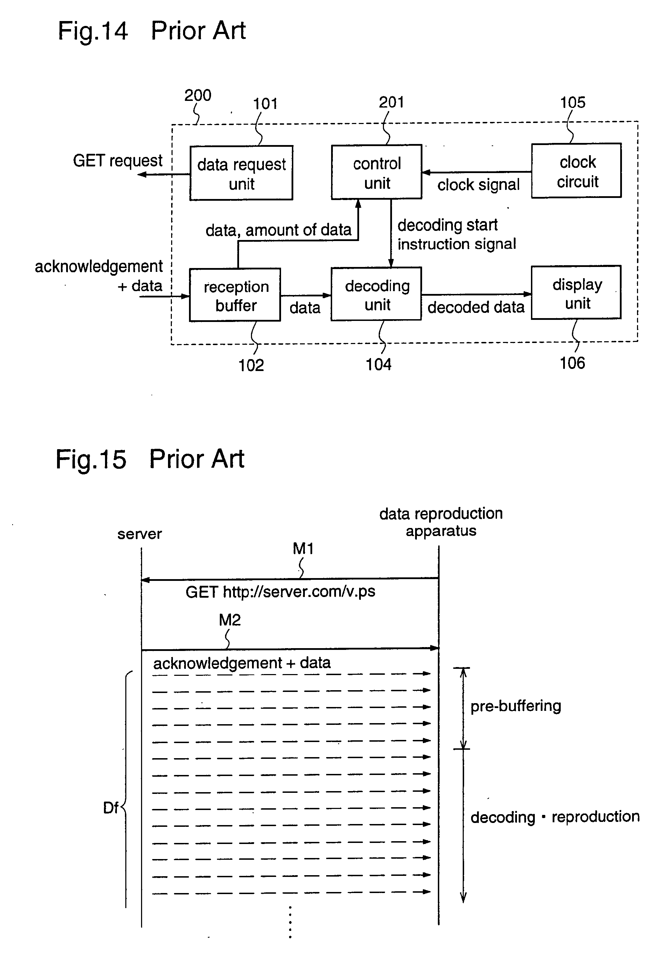

Figure 14 is a block diagram illustrating the construction of a conventional data reproduction apparatus 200.

With reference to figure 14, the conventional data reproduction apparatus 200 includes a data request unit 101 for requesting a server to transmit a PS file; and a reception buffer 102 for receiving, as a response to the request, a PS file including header information and audio visual (hereinafter referred to as AV) data placed behind the header information, and sequentially accumulating the PS file for pre-buffering. Further, the data reproduction apparatus 200 includes a control unit 201 for outputting a decoding start instruction signal for instructing start of decoding of the received PS file when a predetermined period of time has passed after starting reception of the PS file; a decoding unit 104 for decoding the AV data included in the data stored in the reception buffer 102, on the basis of the decoding start instruction signal; a clock circuit 105 for outputting a clock signal to the control unit 201; and a display unit 106 for displaying the decoded data.

Hereinafter, the operation of the conventional data reproduction apparatus 200 constructed as described above will be described.

The data request unit 101 requests a PS file by using HTTP (Hypertext Transfer Protocol) that is standardized by IETF (Internet Engineering Task Force). To be specific, initially, the data request unit 101 requests a server to transmit a PS file, by using a GET method. Figure 15 shows a protocol sequence for downloading the PS file by using HTTP. On receipt of a GET request (GET http://server.com/v.ps) M1, the server analyzes URL information included in this request to search for a specified file "v.ps". When this file exists, the server transmits data M2 including an acknowledgement and file data Df. The data reproduction apparatus 200 receives the data transmitted from the server, and pre-buffers the received data in the reception buffer 102. The control unit 201 performs time counting on the basis of clock information supplied from the clock circuit 105, and outputs a decoding start instruction signal to the decoding unit 104 when a predetermined pre-buffering time has passed after start of data reception. Then, the decoding unit 104 starts reading of data from the reception buffer 102 and decodes the data, and the decoded data is displayed on the display unit 106.

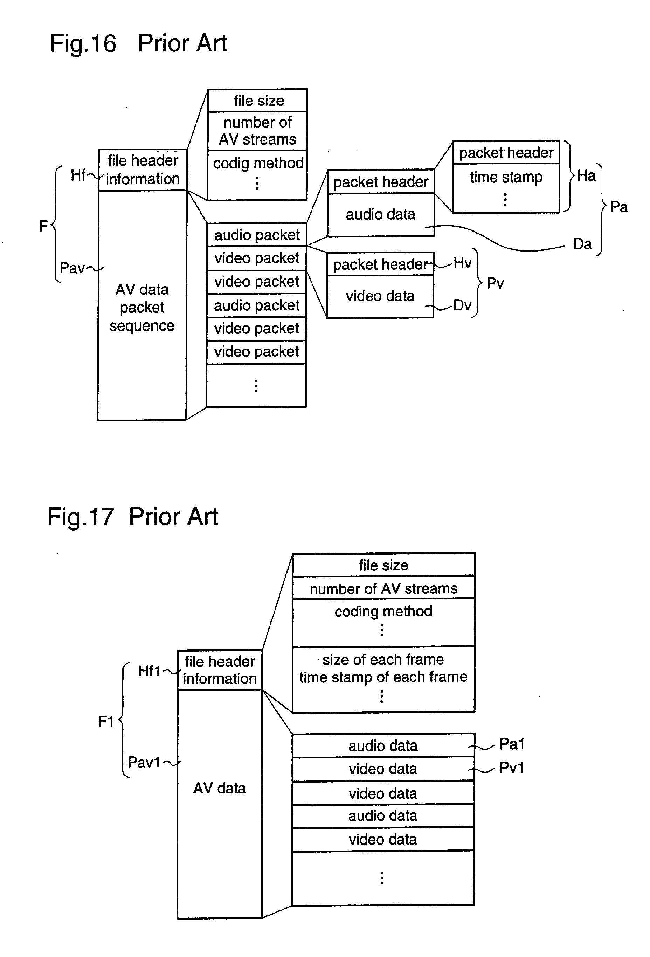

Figure 16 shows the structure of a conventional multiplexed file. The conventional multiplexed file F adopts a packet structure, and file header information Hf including information relating to the whole file is placed at the beginning of the file, and the file header information Hf is followed by an AV data packet sequence Pav. The file header information Hf includes, for example, the file size of the multiplexed file, number of AV streams included in the file, coding method, bit rate, resolution, date of file formation, total display time, and the like. On the other hand, the AV data packet sequence Pav comprises audio packets Pa and video packets Pv being arranged at random. Each audio packet Pa comprises a packet header Ha and audio data Da, and the packet header Ha includes information indicating the file size, time stamp included in the corresponding packet, whether random access is possible or not, and the like. Each video packet Pv comprises a packet header Hv and video data Dv, and the packet header Hv includes information similar to that included in the audio packet Pa.

The size of the file header information Hf in the conventional multiplexed file F is usually as small as about 1 kbyte. This amount of data can be transmitted in about 125 msec at a transmission rate of 64 kbps. Usually, a pre-buffering time of about 3 sec is good enough for this amount of data. The time required for transmitting the file header information Hf is so small in comparison with the pre-buffering time that it can be ignored. Accordingly, even when the pre-buffering time is fixed to about 3 sec regardless of the size of the file header information Hf, no serious problem occurs.

However, if the pre-buffering time is fixed as mentioned above in a multiplexed file F1 based on an MP4 format that is standardized by MPEG as shown in figure 17, a problem occurs as follows. Although the MP4 file F1 comprises a file header information Hf1 and AV data Pav1 that follows the file header information Hf1 like the conventional multiplexed file F, the file header information Hf1 includes the sizes and time stamps of the respective frames, which are included in the AV data packet sequence Pav of the multiplexed file F, in addition to the various kinds of information included in the file header information F of the multiplexed file F, i.e., the file size of the multiplexed file, number of AV streams, coding mode, bit rate, resolution, date of file formation, total display time, etc.

In the MP4 file F1, the size of the file header information Hf1 may vary from several kbytes to 100 kbytes according to the structure of the AV data Pav1 or the length of reproduction time. For example, the time required for transmitting 100 kbytes of data at a transmission rate of 64 kbps is 12.5 sec. Accordingly, in the conventional data reproduction apparatus 200 in which the pre-buffering time is fixed at about 3 sec, the required amount of AV data Pav1 is not yet stored in the buffer at the start of decoding and, therefore, smooth reproduction cannot be carried out.

### SUMMARY OF THE INVENTION

The present invention is made to solve the above-described problems and has for its object to provide an apparatus and a method for reproducing data, which can reliably pre-buffer an amount of AV data required for data reproduction, thereby to perform stable data reproduction.

Other objects and advantages of the invention will become apparent from the detailed description that follows. The detailed description and specific embodiments described are provided only for illustration since various additions and modifications within the scope of the invention will be apparent to those of skill in the art from the detailed description.

According to a first aspect of the present invention, there is provided a data reproduction apparatus for reproducing data including header information and reproduction data that is placed behind the header information, while receiving the data, and the apparatus comprises: a data position detection unit for detecting the beginning position of the reproduction data in the received data, on the basis of the header information; a buffer for holding the received data; a decoding unit for decoding the reproduction data stored in the buffer; and a control unit for outputting, to the decoding unit, a decoding start instruction signal which instructs the decoding unit to start decoding of the reproduction data, when a predetermined period of time has passed after the control unit received the output from the data position detection unit; wherein the decoding unit starts decoding of the reproduction data stored in the buffer, on receipt of the decoding start instruction signal. Since data reproduction is started when a predetermined period of time has passed after detection of the beginning of the received reproduction data, an amount of reproduction data required for data reproduction can be reliably stored in the buffer by the time data reproduction is started, resulting in stable data reproduction.

According to a second aspect of the present invention, in the data reproduction apparatus according to the first aspect, the control unit outputs the decoding start instruction signal when the amount of data stored in the buffer has reached a set value after the control unit received the output from the data position detection unit. Therefore, stable data reproduction can be carried out by starting data reproduction when a predetermined amount of reproduction data has been stored in the buffer.

According to a third aspect of the present invention, in the data reproduction apparatus according to the second aspect, the control unit outputs the decoding start instruction signal when it has received an amount of data having a predetermined ratio to the data size of the received data. Therefore, an amount of reproduction data, which is required for data reproduction, can be stored in the buffer.

According to a fourth aspect of the present invention, in the data reproduction apparatus according to the second aspect, the control unit calculates, on the basis of the reproduction data size information included in the reproduction data, a data size having a predetermined ratio to the size of the reproduction data, which size is indicated by the reproduction data size information, and outputs the decoding start instruction signal when it has received an amount of data equivalent to the calculated data size after reception of the output from the data position detection unit. Therefore, an amount of reproduction data, which is required for performing stable data reproduction, can be stored in the buffer.

According to a fifth aspect of the present invention, in the data reproduction apparatus according to the second aspect, the reproduction data has plural attributes; the buffer has, for each attribute, an attribute-based storage region in which the reproduction data of each attribute is stored; and the control unit regards the amount of data stored in each attribute-based storage region, as the size of the reproduction data of each attribute to be received, and outputs the decoding start instruction signal when it has received the amount of data corresponding to the data size of any attribute. Therefore, an amount of reproduction data, which is required for performing stable data reproduction, can be stored in the buffer.

According to a sixth aspect of the present invention, in the data reproduction apparatus according to the fifth aspect, the control unit regards a predetermined ratio of the amount of data stored in each attribute-based storage region, as the data size of the reproduction data of each attribute to be received. Therefore, an amount of reproduction data, which is required for performing stable data reproduction, can be calculated.

According to a seventh aspect of the present invention, in the data reproduction apparatus according to the fifth or sixth aspect, the control unit outputs the decoding start instruction signal when it has received an amount of data that exceeds the data size of any attribute. Therefore, stable data reproduction can be carried out by storing a predetermined amount of reproduction data in the buffer.

According to an eighth aspect of the present invention, in the data reproduction apparatus according to the second aspect, the reproduction data has plural attributes; and, on the basis of attribute size information indicating an amount of data of each attribute, which is included in the reproduction data, the control unit calculates, for each attribute, a data reception amount that is required for receiving a predetermined amount of reproduction data of each attribute, and regards the sum of the data reception amounts of all attributes as a reproduction data reception amount, and outputs the decoding start instruction signal when it has received an amount of data corresponding to the reproduction data reception amount. Therefore, an amount of reproduction data, which is required for performing stable data reproduction, can be calculated.

According to a ninth aspect of the present invention, in the data reproduction apparatus according to the first aspect, on the basis of frame size information indicating the data size of each frame as well as display time information indicating the display time of each frame, which are included in the header information, the control unit calculates a data size of reproduction data corresponding to a predetermined display time, and outputs the decoding start instruction signal when it has received an amount of data equivalent to the data size after detection of the beginning position of the reproduction data. Therefore, stable data reproduction can be carried out by reliably storing an amount of reproduction data, which is required for data reproduction, in the buffer.

According to a tenth aspect of the present invention, there is provided a data reproduction method for reproducing data which includes header information and reproduction data that is placed behind the header information, while receiving the data, and this method comprises: a data position detection step of detecting the beginning position of the reproduced data in the received data, on the basis of the header information; a storage step of storing the received reproduction data into a buffer; and a decoding step of decoding the stored reproduction data when a predetermined period of time has passed after detection of the beginning position of the reproduction data in the data position detection step. Since data reproduction is started when a predetermined period of time has passed after detection of the beginning of the received reproduction data, an amount of reproduction data required for data reproduction can be reliably stored in the buffer by the time data reproduction is started, resulting in stable data reproduction.

According to an eleventh aspect of the present invention, there is provided a data reproduction method for reproducing data which includes header information and reproduction data that is placed behind the header information, while receiving the data, and this method comprises: a data position detection step of detecting the beginning position of the reproduced data in the received data, on the basis of the header information; a storage step of storing the reproduction data in a buffer until the amount of the stored data reaches a predetermined value after the beginning position of the reproduction data is detected in the data position detection step; and a decoding step of decoding the predetermined amount of reproduction data which is stored in the buffer. In this method, the beginning of the received reproduction data is detected and data reproduction is started when a predetermined amount of reproduction data has been stored in the buffer after the detection, whereby stable data reproduction can be carried out.

### BRIEF DESCRIPTION OF THE DRAWINGS

Figure 1 is a block diagram for explaining the construction and operation of a data reproduction apparatus according to a first embodiment of the present invention.
Figure 2 is a diagram illustrating a logic data structure of an MP4 format multiplexed file.
Figure 3 is a flowchart for explaining the operation of a control unit included in the data reproduction apparatus according to the first embodiment.
Figure 4 is a diagram for explaining the structure sizes and structure IDs which are possessed by the respective structures in the MP4 format multiplexed file.
Figure 5 is a flowchart for explaining another example of operation of the control unit included in the data reproduction apparatus according to the first embodiment.
Figure 6 is a block diagram illustrating the construction and operation of a data reproduction apparatus according to a second embodiment of the present invention.
Figure 7 is a flowchart for explaining the operation of a control unit included in the data reproduction apparatus according to the second embodiment.
Figure 8 is a flowchart for explaining another example of operation of the control unit included in the data reproduction apparatus according to the second embodiment.
Figure 9 is a diagram illustrating the data structure of an MP4 format multiplexed file.
Figures 10(a) and 10(b) are diagrams for explaining a video frame information table and an audio frame information table, respectively, which are formed on the basis of a header information section of the MP4 format multiplexed file.
Figure 11 is a flowchart for explaining another example of operation of the control unit included in the data reproduction apparatus according to the second embodiment.
Figure 12 is a block diagram illustrating the construction and operation of a data reproduction apparatus according to a third embodiment of the present invention.
Figure 13 is a diagram for explaining a handy phone as a data reproduction apparatus according to a fourth embodiment of the present invention.
Figure 14 is a block diagram illustrating the construction and operation of a conventional data reproduction apparatus.
Figure 15 is a diagram for explaining a protocol sequence for downloading a file by using HTTP.
Figure 16 is a diagram illustrating the structure of a conventional multiplexed file.
Figure 17 is a diagram illustrating the structure of an MP4 format multiplexed file.

### DETAILED DESCRIPTION OF THE PREFERRED EMBODIMENTS

Hereinafter, the preferred embodiments of the present invention will be described with reference to the drawings. Since the embodiments described below are merely examples, the present invention is not restricted thereto.

### [Embodiment 1]

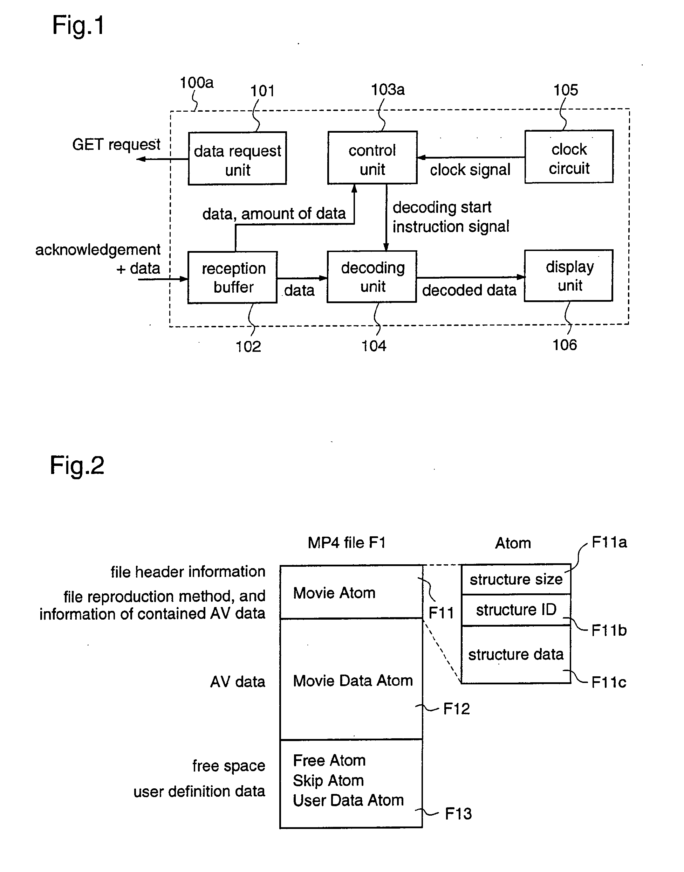

Initially, a data reproduction apparatus as defined in Claim 1 and a data reproduction method as defined in Claim 10 will be described as a first embodiment of the present invention, with reference to figures 1 and 2.

Figure 1 is a block diagram for explaining the construction and operation of a data reproduction apparatus 100a according to the first embodiment.

The data reproduction apparatus 100a according to the first embodiment reproduces a file including file header information and audio visual (hereinafter referred to as AV) data placed behind the file header information, while receiving the file from its beginning.

More specifically, the data reproduction apparatus 100a includes a data request unit 101, and a reception buffer 102. The data request unit 101 requests a server to transmit a file. The reception buffer 102 holds data that is supplied from the server in response to the request, and pre-buffers the data. The data reproduction apparatus 100a further includes a control unit 103, a decoding unit 104, a clock circuit 105, and a display unit 106. The control unit 103 analyzes the contents of the file on the basis of the data stored in the reception buffer 102 to detect the beginning position of the AV data, and outputs a decoding start instruction signal for instructing the decoding unit 104 to start decoding of the AV data, when a predetermined period of time has passed after the detection of the beginning position of the AV data. The decoding unit 104 decodes the AV data which is pre-buffered in the reception buffer 102, on the basis of the decoding start instruction signal. The clock circuit 105 outputs a clock signal to the control unit 103. The display unit 106 reproduces and displays the decoded data.

When the operator performs an operation for requesting a file, the data request unit 101 requests the server to transmit the file, by using a GET method of known HTTP.

The reception buffer 102 is constituted by, for example, a memory, and it sequentially accumulates the received data while pre-buffering the data, and supplies the data to the control unit 103a.

The control unit 103a detects the beginning position of the AV data, and outputs a decoding start instruction signal when a predetermined period of time has passed after the detection. To be specific, the control unit 103a analyzes the contents of the received data to obtain size information possessed by the file header information, and detects a specific position in the received data as the beginning position of the AV data when it has received an amount of data indicated by the size information. After detecting the beginning position of the AV data, the control unit 103a performs time count on the basis of the clock signal supplied from the clock circuit 105 to wait a preset pre-buffering time, and thereafter, outputs a decoding start instruction signal. Thereby, the amount of data to be pre-buffered in the reception buffer 102 is controlled, and at least a predetermined amount of AV data is pre-buffered in the reception buffer 102.

Figure 2 is a diagram illustrating the logic data construction of the MP4-format multiplexed file F1 shown in figure 17. The MP4 file F1 is composed of plural structures called "Atoms", i.e., a structure including file header information Hf1 (Movie Atom) F11, a structure including AV data Pav1 (Movie Data Atom) F12, and a structure including a free space, user-definable data, and the like (Free Atom/Skip Atom/User Data Atom) F13. Each of the structures F11∼F13 is composed of a structure size section indicating the amount of data in the structure, a structure identifier section having a structure identifier that indicates the type of the structure, and a structure data section holding information unique to each structure. That is, the Movie Atom F11 has a structure size section F11a, a structure identifier section F11b, and a structure data section Fllc. The Movie Data Atom F12 has a structure size section F12a, a structure identifier section F12b, and a structure data section F12c (not shown). The Free Atom/Skip Atom/User Data Atom F13 has a structure size section F13a, a structure identifier section F13b, and a structure data section F13c (not shown).

Although, in the MP4 file F1 shown in figure 2, the file header information Hf1 is illustrated as a single structure, this is merely an example, and the file header information Hf1 may be composed of plural structures. Further, each structure may be composed of one or more sub-unit structures, i.e., it may have a nest structure.

Next, the operation of the data reproduction apparatus 100a according to the first embodiment will be described taking, as an example, the case where it receives the MP4 file F1.

When a file GET request is issued by the data request unit 101 to the server, the server analyzes URL information included in the GET request to detect a specified file, and transmits an acknowledgement as well as data including the file to the data reproduction apparatus 100a. The data received by the data reproduction apparatus 100a is pre-buffered in the reception buffer 102 and inputted to the control unit 103a. Then, the control unit 103a analyzes the received data to obtain the size information from the structure size section F11a of the file header information Hf1 included in the Movie Atom F11. The control unit 103a does not include, in the pre-buffering time, the time that elapses until reception of an amount of data equivalent to this size is completed, and treats, as the pre-buffering time, only the time required for receiving the AV data Pav1 included in the Movie Data Atom F12.

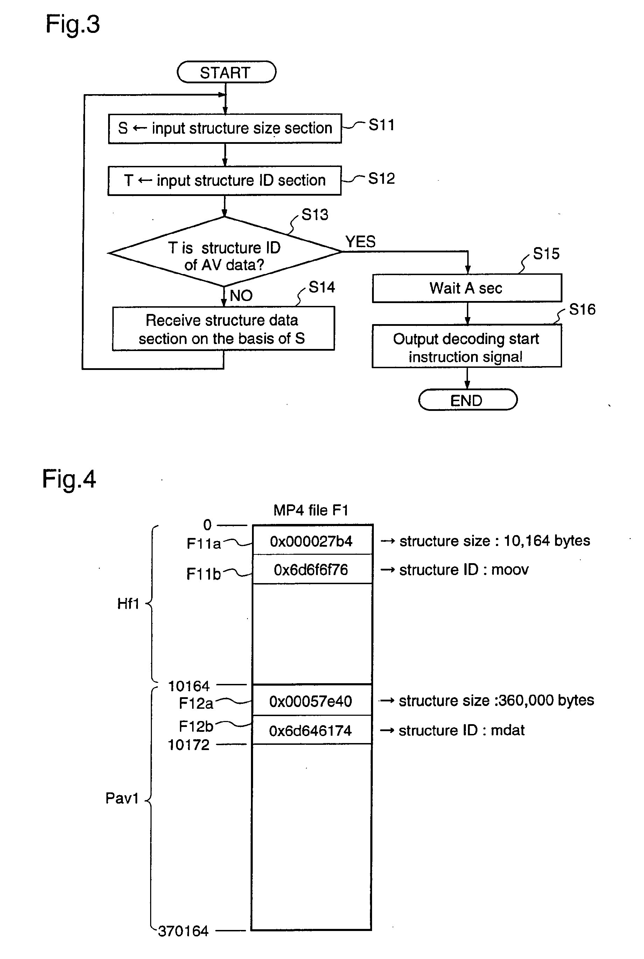

The operation of the control unit 103a will be described with reference to a flowchart shown in figure 3. It assumed that the structure size and structure identifier of each structure in the MP4 file F1 are as shown in figure 4. The MP4 file F1 shown in figure 4 includes a file header information Hf1 having a size of 10,164 bytes and a structure identifier of moov, and AV data Pav1 having a size of 360,000 bytes and a structure identifier of mdat. Each of the structure size section F11a and the structure identifier section F11b of the MP4 file F1 has a data size of 4 bytes, and the structure data section F13c has a data size of 10,156 bytes. Further, 0x means that numerals that follow 0x are expressed in hexadecimal notation.

Initially, a structure size section is inputted to the control unit 103a (step S11) and, subsequently, a structure identifier section is inputted to the control unit 103a (step S12).

Next, the control unit 103a judges whether the inputted structure identifier section is the structure identifier section F12b of the AV data pav1 or not. To be specific, when the control unit 103a receives the MP4 file F1, it judges whether the structure identifier is "mdat" or not (step S13).

When the inputted structure identifier section is not the structure identifier section F12b of the AV data Pav1, i.e., when the structure identifier "moov" of the file header information Hf1 is inputted, the control unit 103a receives the structure data section F11c (10,156 bytes) of the file header information Hf1, on the basis of the size information obtained from the structure size section F11a. The time that elapses until reception of an amount of data equivalent to this size is completed, is not included in the pre-buffering time. When reception of the data of the file header information Hf1 is completed, the control unit 103a returns to step S11 to receive the AV data Pav1 (step S14).

On the other hand, when it is judged in step S13 that the inputted structure identifier is the structure identifier "mdat" of the AV data Pav1, i.e., when reception of the file header information Hf1 is completed and the beginning position of the AV data Pav1 is detected, the control unit 103a waits A sec, which is a predetermined pre-buffering time, to pre-buffer the AV data Pav1 into the reception buffer 102, on the basis of the clock signal supplied from the clock circuit 105 (step S15).

When A sec has passed, the control unit 103a outputs a decoding start instruction signal to the decoding unit 104 (step S16).

On receipt of the decoding start instruction signal, the decoding unit 104 reads the AV data Pav1 which is pre-buffered in the reception buffer 102, and decodes the data. The data decoded by the decoding unit 104 is supplied to the display unit 106, wherein the data is reproduced and displayed.

As described above, in the data reproduction apparatus 100a according to the first embodiment, after the beginning position of the AV data Pav1 is detected on the basis of the size information of the file header information Hf1 included in the received data, the AV data Pav1 is received for a predetermined period of time and, thereafter, decoding is started. Therefore, the AV data Pav1 of the size required for data reproduction can be reliably pre-buffered without being influenced by the amount of data of the file header information Hf1, whereby stable data reproduction can be carried out.

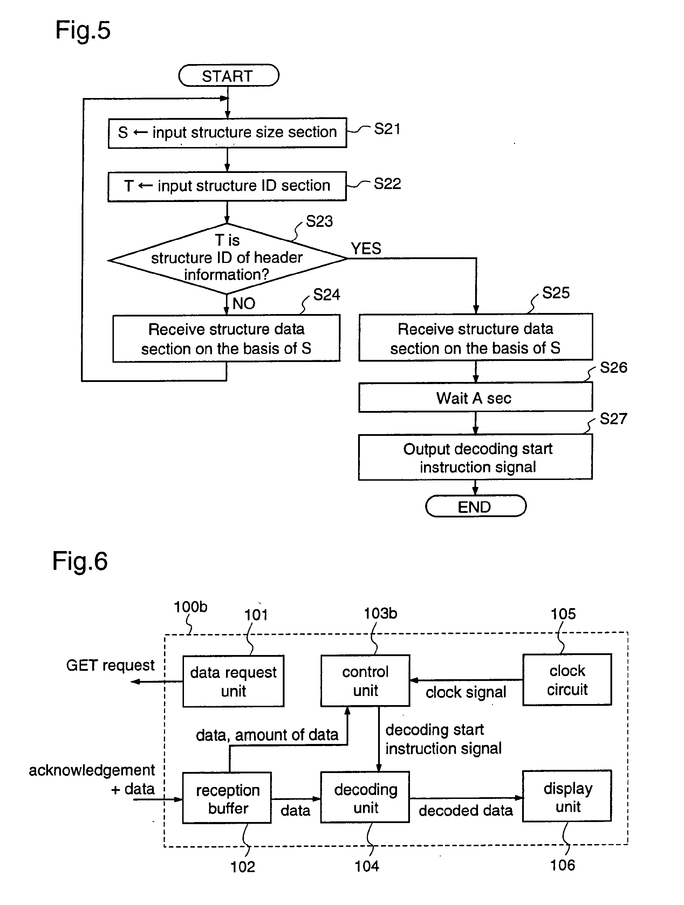

While in this first embodiment the control unit 103a judges that the inputted structure is either the structure of the file header information Hf1 or the structure of the AV data Pav1 according to whether the inputted structure identifier is the structure identifier of the AV data Pav1 or not, the control unit 103a may judge the type of the inputted structure according to whether the inputted identifier is the structure identifier of the file header information Hf1 or not. Hereinafter, a description will be given of a method for controlling the pre-buffering time by judging the type of the inputted structure according to whether the structure identifier is that of the file header information Hf1 or not, and detecting the beginning position of the AV data Pav1, with reference to a flowchart shown in figure 5.

Initially, a structure size section is inputted to the control unit 103a (step S21), and subsequently, a structure identifier section is inputted to the control unit 103a (step S22).

Next, the control unit 103a judges whether the inputted structure identifier section is the structure identifier section F11b of the file header information Hf1 or not. To be specific, when the control unit 103a receives the MP4 file F1, it judges whether the structure identifier is "moov" or not (step S23).

When the inputted structure identifier section is not the structure identifier section F11b of the file header information Hf1, the control unit 103a receives the structure data section of the corresponding structure, on the basis of the size information of the structure size section that is inputted in step S21. When reception of the structure data section equivalent to this size is completed, the control unit 103a returns to step S21 to receive a next-inputted structure (step S24).

On the other hand, when the structure identifier section inputted to the control unit 103a is the structure identifier section F11b of the file header information Hf1, i.e., when the structure identifier "moov" of the file header information Hf1 is inputted, the control unit 103a receives the structure data section F11c (10,156 bytes) of the file header information Hf1, on the basis of the size information obtained from the structure size section F11a (step S25).

When reception of the file header information Hf1 is completed, the control unit 103a waits A sec, that is a predetermined pre-buffering time, to pre-buffer the AV data Pav1 into the reception buffer 102, on the basis of a clock signal supplied from the clock circuit 105 (step S26).

After A sec has passed, the control unit 103a outputs a decoding start instruction signal to the decoding unit 104 (step S27).

As described above, since the type of the inputted structure is judged according to whether the inputted structure identifier is that of the file header information Hf1 or not, even when the structure identifier of the AV data pav1 is omitted, the AV data Pav1 can be pre-buffered into the reception buffer 102 by detecting the beginning position of the AV data Pav1 and waiting the predetermined pre-buffering time.

While in this first embodiment the control unit 103a detects the beginning position of the AV data on the basis of the size information obtained from the file header information, this is merely an example, and the control unit 103a may detect the beginning position of the AV data by other methods. For example, the control unit 103a calculates a header information reception time required for reception of the file header information Hf1 from the obtained size information, performs time count on the basis of the time information supplied from the clock circuit 105, and detects, as the beginning position of the AV data Pav1, a specific position in the received data when the header information reception time has passed after the start of data reception. By obtaining the header information reception time from the file header information Hf1 included in the received data, the beginning position of the AV data Pav1 can be detected when the header information reception time has passed after the start of data reception, whereby only the AV data Pav1 can be pre-buffered without being influenced by the amount of data of the file header information Hf1.

### [Embodiment 2]

Next, data reproduction apparatuses as defined in Claims 2 to 8 and a data reproduction method as defined in Claim 11 will be described as a second embodiment of the present invention, with reference to figures 6 to 11.

Figure 6 is a block diagram illustrating the construction and operation of a data reproduction apparatus 100b according to the second embodiment.

In figure 6, the same reference numerals as those shown in figure 1 denote the same or corresponding parts. The data reproduction apparatus 100b according to the second embodiment includes a data request unit 101 for requesting a server to transmit a file; and a reception buffer 102 for pre-buffering data which is transmitted from the server in response to the request. Further, the data reproduction apparatus 100b includes a control unit 103b for outputting a decoding start instruction signal when a predetermined amount of data has been received after detection of the beginning position of AV data; a decoding unit 104 for decoding the AV data which is pre-buffered in the reception buffer 102, on the basis of the decoding start instruction signal; a clock circuit 105 for outputting a clock signal to the control unit 103b; and a display unit 106 for reproducing and displaying the decoded data.

The control unit 103b detects the beginning position of the AV data, and outputs the decoding start instruction signal when a predetermined amount of data has been received after the detection. To be specific, the control unit 103b obtains the size information from the file header information section of the received data and, when an amount of data indicated by this size information has been received, the control unit 103b detects a specific position in the received data, as the beginning position of the AV data. Further, the control unit 103b waits a period of time during which a predetermined amount of data is received after the detection of the beginning position of the AV data, and thereafter, outputs the decoding start instruction signal. Thereby, the amount of data to be pre-buffered in the reception buffer 102 is controlled, and the predetermined amount of AV data is pre-buffered in the reception buffer 102.

Next, the operation of the data reproduction apparatus 100b according to the second embodiment will be described taking, as an example, the case where it receives the MP4 file F1.

When the data request unit 101 issues a GET request for a file to the server, the server analyzes URL information included in the GET request to search for the designated file, and sends an acknowledgement as well as data including the file to the data reproduction apparatus 100b. The data received by the data reproduction apparatus 100b is pre-buffered in the reception buffer 102 and inputted to the control unit 103b. Then, the control unit 103b analyzes the received data, and obtains the size information from the file header information Hf1. The control unit 103b does not include an amount of data equivalent to this size in the amount of data to be pre-buffered, and treats only the amount of the AV data Pav1 as the amount of data to be pre-buffered.

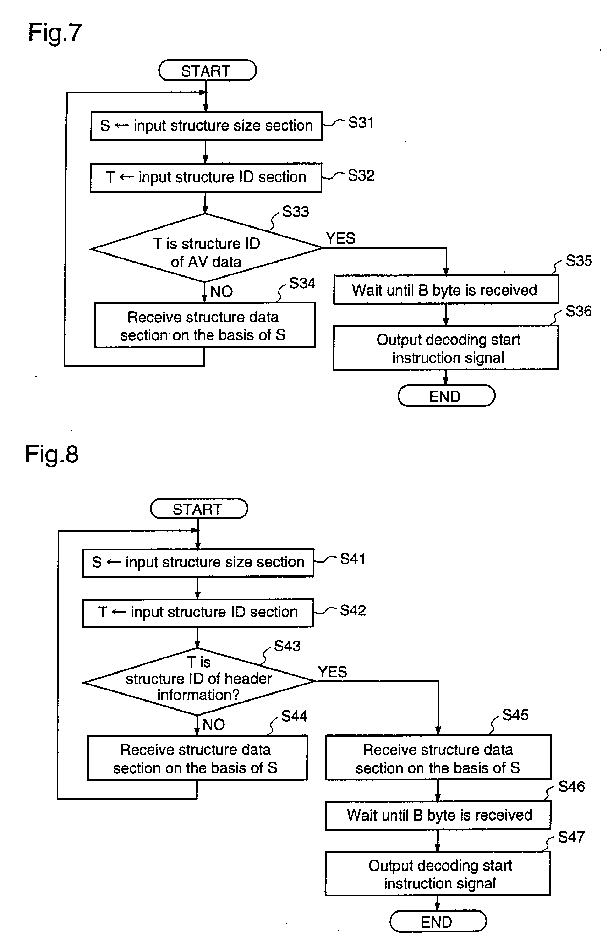

Hereinafter, the operation of the control unit 103b will be described with reference to a flowchart shown in figure 7. It is assumed that the structure size and the structure identifier of each structure in the MP4 file F1 are as shown in figure 4.

A structure size section is inputted to the control unit 103b (step S31), and subsequently, a structure identifier section is inputted to the control unit 103b (step S32).

Next, the control unit 103b judges whether the inputted structure identifier section is the structure identifier section F12b of the AV data Pav1 or not. To be specific, when the control unit 103b receives the MP4 file F1, it judges whether the inputted structure identifier is "mdat" or not (step S33).

When the inputted structure identifier is not the structure identifier F12b of the AV data Pav1, i.e., when the structure identifier "moov" of the file header information Hf1 is inputted, the control unit 103b receives the structure data section F11c (10,156 bytes) of the file header information Hf1, on the basis of the size information obtained from the structure size section F11a. An amount of data corresponding to this size is not treated as the amount of data to be pre-buffered. Further, when reception of the data of the file header information Hf1 is completed, the control unit 103b returns to step S31 to receive the AV data Pav1 (step S34).

On the other hand, when it is judged in step S33 that the inputted structure identifier is the structure identifier "mdat" of the AV data Pav1, i.e., when reception of the file header information Hf1 is completed and the beginning position of the AV data Pav1 is detected, the control unit 103b waits until a predetermined amount of data, i.e., B bytes, is received, and pre-buffers the AV data Pav1 in the reception buffer 102 (step S35).

When the control unit 103b has received the B bytes of AV data Pav1, it outputs a decoding start instruction signal to the decoding unit 104 (step S36).

On receipt of the decoding start instruction signal, the decoding unit 104 reads the AV data Pav1 which is pre-buffered in the reception buffer 102, and decodes the data. The data decoded by the decoding unit 104 is inputted to the display unit 106, wherein the data is reproduced and displayed.

As described above, in the data reproduction apparatus 100b according to the second embodiment, after the beginning position of the AV data Pav1 is detected on the basis of the size information of the file header information Hf1 included in the received data, a predetermined amount of data is received and, thereafter, decoding is started. Therefore, a predetermined amount of AV data Pav1 required for data reproduction can be reliably pre-buffered without being influenced by the amount of data of the file header information Hf1, resulting in stable data reproduction.

While in this second embodiment the control unit 103b judges that the inputted structure is either the structure of the file header information Hf1 or the structure of the AV data Pav1 according to whether the inputted structure identifier is the identifier of the AV data Pav1 or not, the control unit 103b may judge the type of the inputted structure according to whether the inputted structure identifier is the identifier of the file header information Hf1 or not. Hereinafter, a description will be given of a method of controlling the amount of data to be pre-buffered, by judging the type of structure according to whether the structure identifier of the file header information Hf1 is inputted or not, and detecting the beginning position of the AV data Pav1, with reference to a flowchart shown in figure 8.

Initially, a structure size section is inputted to the control unit 103b (step S41), and then a structure identifier is inputted to the control unit 103b (step S42).

Next, the control unit 103b judges whether the inputted structure identifier section is the structure identifier section F11b of the file header information Hf1 or not. When the control unit 103b receives the MP4 file F1, the it judges whether the inputted structure identifier is "moov" or not (step S43).

When the inputted structure identifier section is not the structure identifier section F11b of the file header information Hf1, the control unit 103b receives the structure data section of the corresponding structure on the basis of the size information of the structure size section that is inputted in step S41. When reception of the structure data section corresponding to this size is completed, the control unit 103b returns to step S41 to receive a next-inputted structure (step S44).

On the other hand, when the structure identifier inputted to the control unit 103b is the structure identifier section F11b of the file header information Hf1, i.e., when the structure identifier "moov" of the file header information Hf1 is inputted, the control unit 103b receives the structure data section F11c (10,156 bytes) of the file header information Hf1, on the basis of the size information obtained from the structure size section F11a (step S45).

When reception of the file header information Hf1 is completed, the control unit 103b waits until it receives a predetermined amount of data, i.e., B bytes, and pre-buffers the AV data Pav1 in the reception buffer 102 (step S46).

On receipt of the B bytes of AV data Pav1, the control unit 103b outputs a decoding start instruction signal to the decoding unit 104 (step S47).

As described above, since the type of the inputted structure is judged according to whether the structure identifier of the file header information Hf1 is inputted or not, even when the structure identifier of the AV data Pav1 is omitted, it is possible to detect the beginning position of the AV data Pav1 and pre-buffer a predetermined amount (B bytes) of AV data Pav1.

Further, while in this second embodiment the amount of data to be received by the time the decoding start instruction signal is outputted is predetermined, it may be variably set according to the size of the file. For example, the control unit 103b may output a decoding start instruction signal when it has received an amount of data having a predetermined ratio to the whole file size after detection of the beginning position of the AV data Pav1. Preferably, the ratio can be set at 10%. By starting decoding after an amount of data having a predetermined ratio to the file size has been received, the AV data Pav1 of the size required for data reproduction can be reliably pre-buffered, whereby stable data reproduction can be carried out.

Further, the amount of data to be received by the time the decoding start instruction signal is outputted may be variably set on the basis of the size of the AV data Pav1. For example, the control unit 103b may output the decoding start instruction signal when it has received an amount of data having a predetermined ratio to the structure size that is shown in the structure size section F12a of the AV data Pav1, after detection of the beginning position of the AV data Pav1. Preferably, the ratio can be set at 10%. By starting decoding after an amount of data having a predetermined ratio to the size of the AV data Pav1 has been received, the AV data Pav1 of the size required for data reproduction can be reliably pre-buffered, resulting in stable data reproduction.

Furthermore, the reception buffer 102 may be divided into a region where video data Pv1 is stored (video buffer), and a region where audio data Pa1 is stored (audio buffer), and an amount of data to be received by the time the decoding start instruction signal is outputted may be set for each of the video data Pv1 and the audio data Pa1. For example, the control unit 103b may output the decoding start instruction signal when either of the amount of the received video data Pv1 or the amount of the received audio data Pa1 reaches a set value. Alternatively, the control unit 103b may output the decoding start instruction signal when either of the amount of the received video data Pv1 or the amount of the received audio data Pa1 exceeds the set value. For example, the set value of the video data Pv1 can be 2/3 of the size of the video buffer, and the set value of the audio data Pa1 can be equal to the size of the audio buffer. By starting decoding when either the amount of the received video data Pv1 or the amount of the received audio data Pa1 reaches or exceeds the set value, the AV data Pav1 of the size required for data reproduction can reliably pre-buffered, resulting in stable data reproduction.

Furthermore, the amount of data to be received by the time the decoding start instruction signal is outputted may be variably set by analyzing the file header information Hf1. To be specific, the control unit 103b calculates the amount of video data Pv1 and the amount of audio data Pa1 to be received by the time it outputs the decoding start instruction signal, on the basis of the size information included in the structure size section F11a of the file header information Hf1, and sets the sum of the calculated amounts of data as an amount of data to be received. The control unit 103b outputs the decoding start instruction signal when the sum of the amounts of video data Pv1 and audio data Pa1 exceeds the set value.

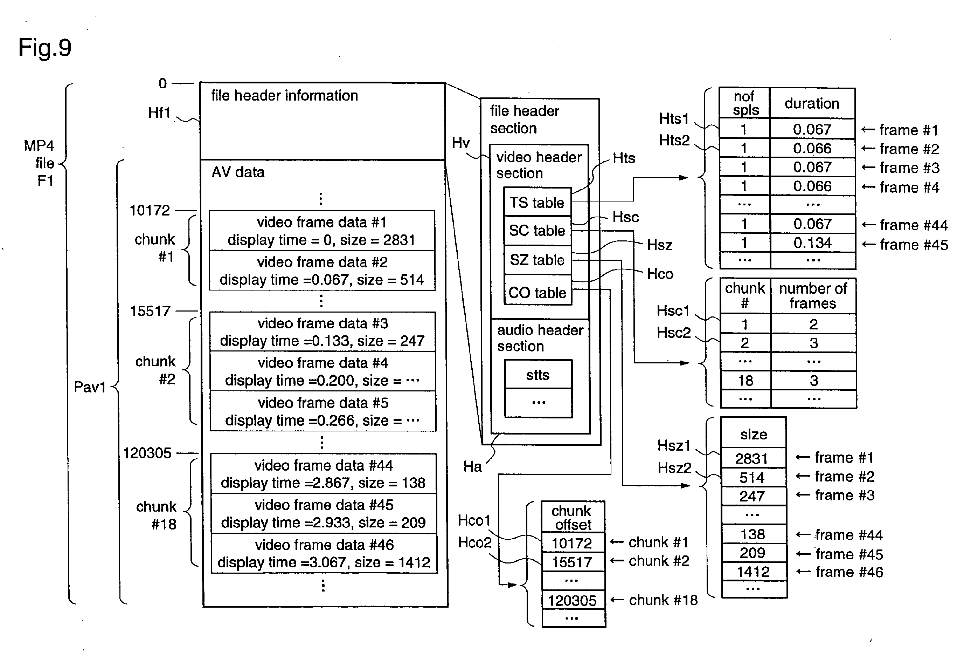

Hereinafter, a description will be given of a method for calculating an amount of AV data Pav1 to be received, which is required for pre-buffering the video data Pv1 equivalent to 2/3 of the size of the video buffer, and the audio data Pa1 equivalent to the size of the audio buffer. It is assumed that the data structure of the MP4 file F1 is as shown in figure 9.

Initially, the data structure of the MP4 file F1 shown in figure 9 will be described. Although the video data Pv1 and the audio data Pa1 are multiplexed in the AV data Pav1, only the video data Pv1 is noticed in the following description.

The video data Pv1 in the MP4 file F1 has data of the respective video frames, for example, it has data of video frame #1 as video frame data #1, data of video frame #2 as video frame data #2, and data of video frame #3 as video frame data #3. In figure 9, the start time of the video frame data #1 is 0 sec and the data size is 2,831 bytes, the start time of the video frame data #2 is 0.067 sec and the data size is 514 bytes, and the start time of the video frame data #3 is 0.133 sec and the data size is 247 bytes. Further, in the MP4 format file, when plural frames of the same attribute continue, these frames are managed together as a chunk. Chunks are appropriately determined when forming the MP4 format file. A chunk #1 of the MP4 file F1 is composed of two frames of video frame data #1 and video frame data #2, a chunk #2 is composed of three frames of video frame data #3∼#5, ..., and a chunk #18 is composed of three frames of video frame data #44∼#46.

Further, the file header information Hf1 of the MP4 file F1 has a video header section Hv including information relating to the video data Pv1, and an audio header section Ha (not shown) including information relating to the audio data Pa1. The video header section Hv includes a time stamp table (hereinafter referred to as "TS table") Hts indicating the duration of each frame, a chunk table (hereinafter referred to as "SC table") Hsc indicating the number of frames included in each chunk, a size table (hereinafter referred to as "SZ table") Hsz indicating the size of each frame, and an chunk offset table (hereinafter referred to as "CO table") Hco indicating the beginning position of each chunk.

When the display time of the video frame #1 is 0 sec, the display time of the video frame #2 is 0.067 sec, and the display time of the video frame #3 is 0.133 sec, the duration of the video frame #1 is 0.067 sec, and the duration of the video frame #2 is 0.066 sec. The TS table Hts describes the duration of each video frame. For example, "0.067" and "0.066" are described in (Hts1, Hts2) corresponding to the video frame #1 and the video frame #2, respectively. Further, in the SC table Hsc, "2" and "3" are described in sections (Hsc1, Hsc2) corresponding to the chunk #1 and the chunk #2, respectively. In the SZ table Hsz, "2831" and "514" are described in sections (Hsz1, Hsz2) corresponding to the video frame #1 and video frame #2, respectively. In the CO table Hco, "10172" and "15517" are described in sections (Hco1, Hco2) corresponding to the chunk #1 and the chunk #2, respectively.

Next, a description will be given of a method for determining the amount of data to be received by the time the decoding start instruction signal is outputted.

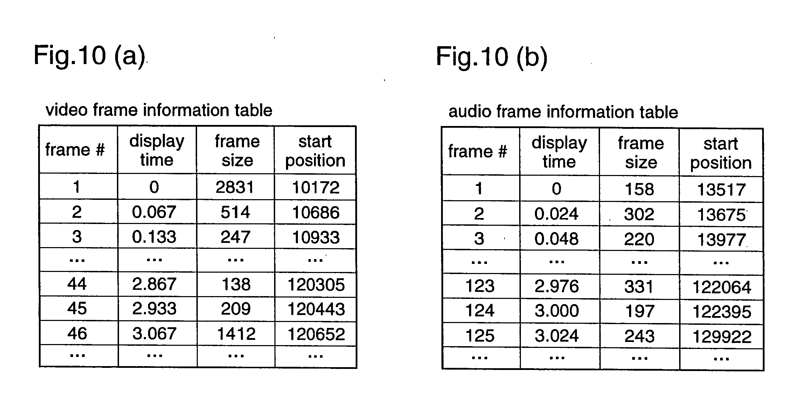

When reception of the file header information Hf1 is completed, the control unit 103b forms a video frame information table in which the display times, sizes, and start positions of the respective frames are organized, on the basis of the obtained video header section Hv. Further, the control unit 103b forms an audio frame information table in which the display times, sizes, and start positions of the respective frames are organized, on the basis of the obtained audio header section Ha. Figures 10(a) and 10(b) illustrate the video frame information table and the audio frame information table, which are formed on the basis of the file header information Hf1 of the MP4 file F1, respectively.

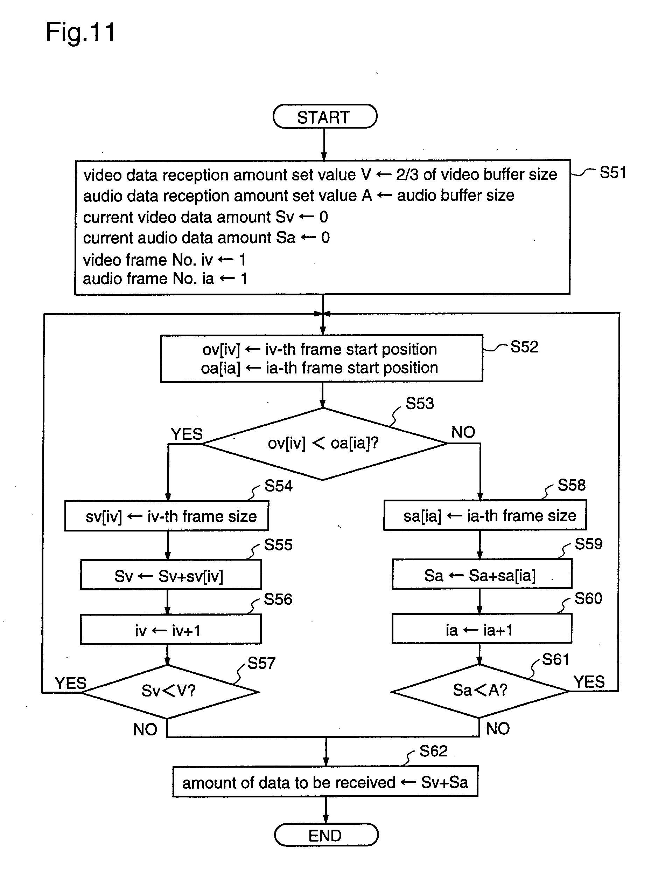

After forming the video frame information table and the audio frame information table, the control unit 103b calculates the amount of data to be received by the time it outputs the decoding start instruction signal, on the basis of these tables. Hereinafter, the method of calculating this amount of data will be described with reference to a flowchart of figure 11.

Initially, the control unit 103b initializes the various kinds of variables. To be specific, a set value V of the amount of video data to be received is 2/3 of the video buffer size, and a set value A of the amount of audio data to be received is equal to the size of the audio buffer. Further, "0" is assigned to the video data amount Sy indicating the current amount of video data and to the audio data amount Sa indicating the current amount of audio data, and "1" is assigned to the video frame number iv indicating the current video frame number and to the audio frame number ia indicating the current audio frame number (step S51).

Next, the control unit 103b obtains the start position of the iv-th video frame and the start position of the ia-th audio frame from the video frame information table and the audio frame information table, respectively, and assigns the start position of the iv-th video frame to a video frame start position ov indicating the start position of video frame (it is expressed by ov[iv]). Further, the control unit 103b assigns the start position of the ia-th audio frame to an audio frame start position oa indicating the start position of audio frame (it is expressed as oa[ia]) (step S52).

Then, the control unit 103a judges that either the video frame start position ov[iv] or the audio frame start position oa[ia] is larger, and it goes to step S54 when the video frame start position ov[iv] is smaller than the audio frame start position oa[ia], or goes to step S58 when the video frame start position ov[iv] is not smaller than the audio frame start position oa[ia] (step S53).

When it is judged in step S53 that the video frame start position ov[iv] is smaller than the audio frame start position oa[ia], the control unit 103b obtains the size of the iv-th video frame from the video frame information table, and assigns the size of the iv-th video frame to a video frame size sv (it is expressed as sv[iv]) (step S54).

Next, the control unit 103b adds the video frame size sv[iv] to the video data amount Sv (step S55), and increments the video frame number iv by 1 (step S56).

Then, the control unit 103b judges whether or not the current video data amount Sv reaches the set value V of the amount of video data to be received. When the video data amount Sv is smaller than the set value V, the control unit 103b returns to step S52 to update the video data amount Sv (step S57).

When it is judged in step S53 that the video frame start position ov[iv] is not smaller than the audio frame start position oa[ia], the control unit 103b obtains the size of the ia-th audio frame from the audio frame information table, and assigns the size of the ia-th audio frame to an audio frame size sa (it is expressed as sa[ia]) (step S58).

Next, the control unit 103b adds the audio frame size sa[ia] to the audio data amount Sa (step S59), and increments the audio frame number ia by 1 (step S60).

The control unit 103b judges whether or not the current audio data amount Sa reaches the set value A of the amount of audio data to be received. When the audio data amount Sa is smaller than the set value A, the control unit 103b returns to step S52 to update the audio data amount Sa (step S61).

When it is judged in step S57 that the video data amount Sv is larger than the set value V of the amount of video data to be received and it is judged in step S61 that the audio data amount Sa is larger than the set value A of the amount of audio data to be received, the control unit 103b calculates the sum of the video data amount Sv and the audio data amount Sa. The sum of the video data amount Sv and the audio data amount Sa is the amount of data to be received (step S62).

As described above, by setting the total amount of video data and audio data to be received on the basis of the file header information Hf1, the AV data Pav1 of the size required for data reproduction can be reliably pre-buffered.

### [Embodiment 3]

Next, a data reproduction apparatus as defined in Claim 9 of the present invention will be described as a third embodiment of the present invention, with reference to the drawings.

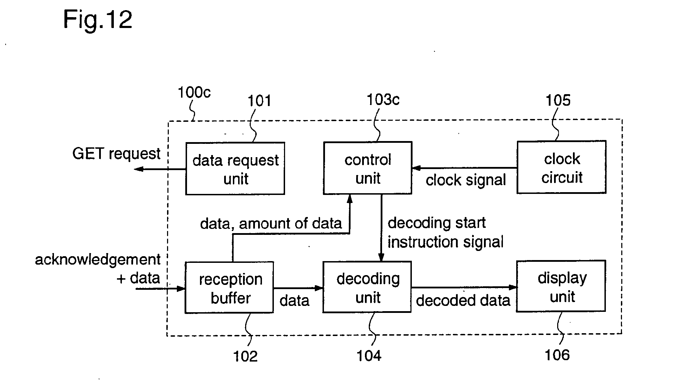

Figure 12 is a block diagram for explaining the construction and operation of a data reproduction apparatus 100c according to the third embodiment.

In figure 12, the same reference numerals as those shown in figure 1 denote the same or corresponding parts. The data reproduction apparatus 100c includes a data request unit 101 for requesting a server to transmit a file, and a reception buffer 102 for pre-buffering data of the file that is transmitted from the server in response to the request. The data reproduction apparatus 100c further includes a control unit 103 for calculating an amount of data that is required for performing data display for a predetermined period of time, on the basis of the data stored in the reception buffer 102, detecting the beginning position of AV data, and outputting a decoding start instruction signal when it has received the calculated amount of data after detection of the beginning position of AV data; a decoding unit 104 for decoding the AV data that is pre-buffered in the reception buffer 102, on the basis of the decoding start instruction signal; a clock circuit 105 for outputting a clock signal to the control unit 103c; and a display unit 106 for reproducing and displaying the decoded data.

Next, the operation of the data reproduction apparatus 100c will be described taking, as an example, the case where the apparatus 100c receives an MP4 file.

When file header information Hf1 is inputted to the control unit 103c, the control unit 103c forms a video frame information table in which the display times, frame sizes, and start positions of the respective video frames are organized, on the basis of the file header information Hf1. Then, on the basis of the video frame information table, the control unit 103c calculates the frame size of video frames corresponding to a predetermined display time. The video frame information table is shown in figure 10(a). When the predetermined display time is 3 sec, the frame size corresponding to 3 sec is the sum of the frame sizes of frames from frame #1 to frame #46 (i.e., 2831+514+247+ ... +138+209+1412) and, for example, it is 21,020 bytes. After detecting the beginning position of the AV data Pav1, the control unit 103c waits a period during which the data corresponding to the calculated size is received, and thereafter, outputs a decoding start instruction signal. To be specific, when the control unit 103c is receiving the MP4 file F1, it detects the beginning position of the AV data Pav1, and waits a period during which it receives more than 21,020 bytes of data, and thereafter, outputs the decoding start instruction signal. Thereby, the amount of data to be pre-buffered in the reception buffer 102 is controlled, and at least a predetermined amount of data is pre-buffered in the reception buffer 102. When there is no video frame that matches the predetermined display time, data of frames corresponding to either a longer display time or a shorter display time than the predetermined display time may also be pre-buffered.

As described above, in the data reproduction apparatus 100c according to the third embodiment, since decoding is started after an amount of data required for performing data reproduction for a predetermined period of time is received, the AV data of the size required for data reproduction can be reliably pre-buffered, resulting in stable data reproduction.

While in the first to third embodiments a data reproduction apparatus which reproduces data requested to the server while receiving the data is described, a PC (Personal Computer), a handy phone, and the like are adopted as examples of the apparatus.

### [Embodiment 4]

Hereinafter, a description will be given of a handy phone which reproduces data requested to the server while receiving the data, as a fourth embodiment of the present invention,

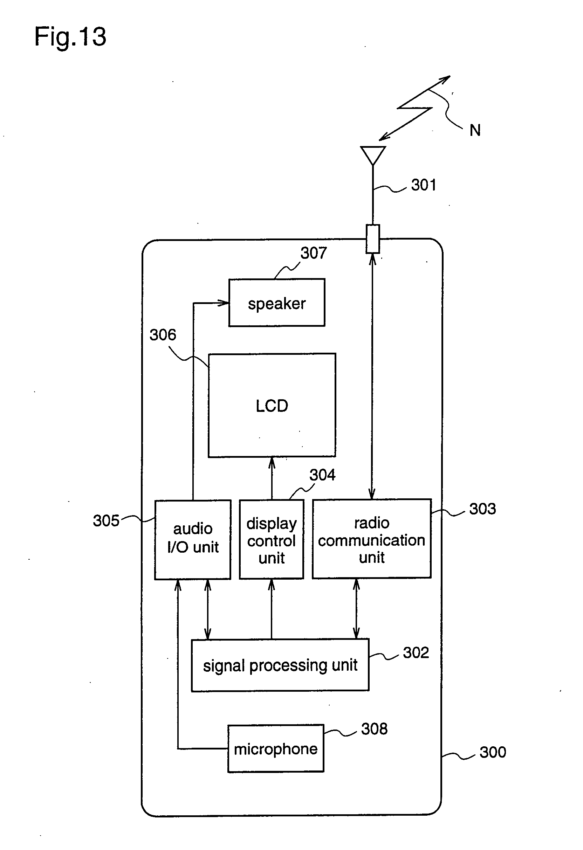

Figure 13 is a diagram for explaining a handy phone 300 according to the fourth embodiment.

The handy phone 300 of this fourth embodiment includes a signal processing unit 302 for performing various kinds of signal processing; and a radio communication unit 303 for outputting a radio signal N received by an antenna 301 as a reception signal to the signal processing unit 302, and transmitting a signal generated by the signal processing unit 302 (transmission signal) as a radio signal N from the antenna 301.

Further, the handy phone 300 includes a liquid crystal display unit (LCD) 306 for performing image display; a microphone 308 for inputting voices; a speaker 307 for reproducing an audio signal; a display control unit 304 for receiving an image signal processed by the signal processing unit 302, and controlling the LCD 306 so that image display is carried out on the basis of the image signal, and an audio I/O unit 305 for outputting an input audio signal from the microphone 308 to the signal processing unit 302, and outputting the audio signal processed by the signal processing unit 302 to the speaker 307. For simplification, a button operation unit of the handy phone is not shown in figure 13.

The signal processing unit 302 performs data reproduction using the data reproduction apparatus 100a according to the first embodiment. That is, the signal processing unit 302 includes the data request unit 101, the reception buffer 102, the control unit 103a, the decoding unit 104, and the clock circuit 105 which are included in the data reproduction apparatus 100a according to the first embodiment. Further, the display control unit 304 and the LCD 306 of the handy phone 300 according to the fourth embodiment correspond to the display unit 106 according to the first embodiment.

In the handy phone 300 constituted as described above, when an operation for reproducing a specific file is carried out by the user, the signal processing unit 302 requests the server to transmit the file specified by the user. Further, the signal processing unit 302 pre-buffers data transmitted from the server in the reception buffer 102 while receiving the data. When the AV data included in the received data has been pre-buffered for a predetermined period of time, the signal processing unit 302 starts decoding of the data.

While in this fourth embodiment a handy phone which performs data reproduction using the data reproduction apparatus 100a according to the first embodiment is described, a handy phone which performs data reproduction using the data reproduction apparatus 100b or 100c according to the second or third embodiment is also within the scope of the present invention.

## Claims

1. A data reproduction apparatus for reproducing data including header information and reproduction data that is placed behind the header information, while receiving the data, said apparatus comprising:
a data position detection unit for detecting the beginning position of the reproduction data in the received data, on the basis of the header information;
a buffer for holding the received data;
a decoding unit for decoding the reproduction data stored in the buffer; and
a control unit for outputting, to the decoding unit, a decoding start instruction signal which instructs the decoding unit to start decoding of the reproduction data, when a predetermined period of time has passed after the control unit received the output from the data position detection unit;
wherein the decoding unit starts decoding of the reproduction data stored in the buffer, on receipt of the decoding start instruction signal.

2. A data reproduction apparatus as defined in Claim 1, wherein the control unit outputs the decoding start instruction signal when the amount of data stored in the buffer has reached a set value after the control unit received the output from the data position detection unit.

3. A data reproduction apparatus as defined in Claim 2, wherein the control unit outputs the decoding start instruction signal when it has received an amount of data having a predetermined ratio to the data size of the received data.

4. A data reproduction apparatus as defined in Claim 2, wherein
the control unit calculates, on the basis of the reproduction data size information included in the reproduction data, a data size having a predetermined ratio to the size of the reproduction data, which size is indicated by the reproduction data size information, and outputs the decoding start instruction signal when it has received an amount of data equivalent to the calculated data size after reception of the output from the data position detection unit.

5. A data reproduction apparatus as defined in Claim 2, wherein
the reproduction data has plural attributes;
the buffer has, for each attribute, an attribute-based storage region in which the reproduction data of each attribute is stored; and
the control unit regards the amount of data stored in each attribute-based storage region, as the size of the reproduction data of each attribute to be received, and outputs the decoding start instruction signal when it has received the amount of data corresponding to the data size of any attribute.

6. A data reproduction apparatus as defined in Claim 5, wherein
the control unit regards a predetermined ratio of the amount of data stored in each attribute-based storage region, as the data size of the reproduction data of each attribute to be received.

7. A data reproduction apparatus as defined in Claim 5, wherein
the control unit outputs the decoding start instruction signal when it has received an amount of data that exceeds the data size of any attribute.

8. A data reproduction apparatus as defined in Claim 6, wherein
the control unit outputs the decoding start instruction signal when it has received an amount of data that exceeds the data size of any attribute.

9. A data reproduction apparatus as defined in Claim 2, wherein
the reproduction data has plural attributes; and
on the basis of attribute size information indicating an amount of data of each attribute, which information is included in the reproduction data, the control unit calculates, for each attribute, a data reception amount that is required for receiving a predetermined amount of reproduction data of each attribute, and regards the sum of the data reception amounts of all attributes as a reproduction data reception amount, and outputs the decoding start instruction signal when it has received an amount of data corresponding to the reproduction data reception amount.

10. A data reproduction apparatus as defined in Claim 1, wherein
on the basis of frame size information indicating the data size of each frame as well as display time information indicating the display time of each frame, which are included in the header information, the control unit calculates a data size of reproduction data corresponding to a predetermined display time, and outputs the decoding start instruction signal when it has received an amount of data equivalent to the data size after detection of the beginning position of the reproduction data.

11. A data reproduction method for reproducing data which includes header information and reproduction data that is placed behind the header information, while receiving the data, said method comprising:
a data position detection step of detecting the beginning position of the reproduced data in the received data, on the basis of the header information;
a storage step of storing the received reproduction data into a buffer; and
a decoding step of decoding the stored reproduction data when a predetermined period of time has passed after detection of the beginning position of the reproduction data in the data position detection step.

12. A data reproduction method for reproducing data which includes header information and reproduction data that is placed behind the header information, while receiving the data, said method comprising:
a data position detection step of detecting the beginning position of the reproduced data in the received data, on the basis of the header information;
a storage step of storing the reproduction data in a buffer until the amount of the stored data reaches a predetermined value after the beginning position of the reproduction data is detected in the data position detection step; and
a decoding step of decoding the predetermined amount of reproduction data which is stored in the buffer.
